(19) Europäisches Patentamt
European Patent Office
Office européen des brevets

(11) **EP 4 155 858 B1**

(12) **EUROPEAN PATENT SPECIFICATION**

(45) Date of publication and mention
of the grant of the patent:
**03.12.2025  Bulletin 2025/49**

(21) Application number: **21905187.7**

(22) Date of filing: **23.09.2021**

(51) International Patent Classification (IPC):
**G05D 1/00** (2024.01)

(52) Cooperative Patent Classification (CPC):
**G05D 1/0225; B60L 53/14; B60L 53/36;**
**B60L 53/66; G05D 1/0242;** Y02T 10/70;
Y02T 10/7072; Y02T 90/12

(86) International application number:
**PCT/CN2021/119826**

(87) International publication number:
**WO 2022/127256 (23.06.2022 Gazette 2022/25)**

(54) **GUIDANCE CONTROL METHOD AND APPARATUS, CHARGING PILE AND ROBOT**

VERFAHREN UND VORRICHTUNG ZUR FÜHRUNGSSTEUERUNG, LADESÄULE UND ROBOTER

PROCÉDÉ ET APPAREIL DE COMMANDE DE GUIDAGE, PILE DE CHARGE ET ROBOT

(84) Designated Contracting States:
**AL AT BE BG CH CY CZ DE DK EE ES FI FR GB**
**GR HR HU IE IS IT LI LT LU LV MC MK MT NL NO**
**PL PT RO RS SE SI SK SM TR**

(30) Priority: **14.12.2020  CN 202011467074**

(43) Date of publication of application:
**29.03.2023  Bulletin 2023/13**

(73) Proprietor: **Jingdong Technology Information**
**Technology Co., Ltd.**
**Beijing 100176 (CN)**

(72) Inventors:
• **YAO, Xiujun**
  **Beijing 100176 (CN)**
• **GUI, Chenguang**
  **Beijing 100176 (CN)**
• **XU, Zhetao**
  **Beijing 100176 (CN)**

(74) Representative: **Prüfer & Partner mbB**
**Patentanwälte · Rechtsanwälte**
**Sohnckestraße 12**
**81479 München (DE)**

(56) References cited:
EP-B1- 3 398 020          CN-A- 1 637 432
CN-A- 106 444 748       CN-A- 106 877 454
CN-A- 107 748 353       CN-A- 111 596 260
CN-A- 112 596 519       JP-A- 2015 132 893
US-A1- 2007 118 248    US-A1- 2007 118 248
US-B2- 7 615 957

## Description

### TECHNICAL FIELD

The disclosure relates to the field of control, in particular to a control method and a control device for providing guidance, a charging pile and a robot.

### BACKGROUND

The machine room inspection robot is an intelligent equipment for assisting or replacing manpower to execute inspection tasks in a data machine room. Because the machine room inspection robot has the characteristics of being intelligent, of low cost and capable of performing inspection incessantly, they are deployed in large quantities in a data machine room. During working, the inspection robot is powered by a battery, and when the battery level is below a preset threshold, the inspection robot will return to the charging pile automatically for charging.

US 2007 118248 A1 discloses a method and apparatus for reckoning a position of a moving robot using dead-reckoning and range sensing. The method includes performing dead-reckoning to determine a variation state in accordance with motion of the moving robot, calculating an absolute position of the moving robot by sensing a distance between the moving robot and at least one fixed position, predicting an optimized current position of the moving robot using the variation state and the absolute position, determining whether the optimized current position is within a specified effective area, and correcting the optimized current position in accordance with the determined result.

CN 106 877 454 A discloses a robot charging method and a robot charging device. The method comprises the steps of detecting a path pilot signal emitted by a charging pile and a real-time distance between a robot and the charging pile, if the electric quantity of the charging pile is lower than a preset threshold; and determining a moving direction according to the path pilot signal, and determining a moving speed according to the real-time distance, and controlling the robot to move to the charging pile at the moving speed along the moving direction. The moving speed of the robot is controlled during a process that the robot moves to the charging pile according to the distance between the robot and the charging pile, so that the defect that collision or low time efficiency may be caused by too fast or too slow moving speed can be overcome. Then a charging request including the electric quantity is sent to the charging pile in response to a butt-joint indication signal, so that the situation that the robot triggers a charging requirement is determined if the charging pile receives the charging request within preset time, the charging pile is triggered to charge the robot, and the security problem caused by the condition that the charging pile is mistakenly triggered for charging is solved.

## SUMMARY

The object of the present invention is solved by the control method for providing guidance performed by a control device according to claim 1 and by the control device according to 7 and by the charging pile according to claim 8 and by the non-transitory computer readable storage medium according to claim 10. According to a first aspect of the embodiments of the present disclosure, there is provided a control method for providing guidance performed by a control device for providing guidance in a charging pile, comprising:
triggering a first positioning circuit to transmit a first request message at a preset period, and triggering a second positioning circuit to transmit a second request message at the preset period after receiving a guidance request message transmitted by a robot, thereby the robot transmitting a first response message after receiving the first request message, and transmitting a second response message after receiving the second request message; determining a first distance between the robot and the first positioning circuit according to a time delay between the first positioning circuit transmitting the first request message and receiving the first response message after the first positioning circuit receiving the first response message; determining a second distance between the robot and the second positioning circuit according to a time delay between the second positioning circuit transmitting the second request message and receiving the second response message after the second positioning circuit receiving the second response message; determining a position of the robot relative to the charging pile according to the first distance and the second distance; and transmitting information about the position to the robot, thereby the robot adjusting a path according to the position to complete the docking of the robot to the charging pile.

In some embodiments, the control method further comprising: detecting whether a signal receiver receive a signal transmitted by a signal transmitter, wherein the signal receiver cannot receive the signal transmitted by the signal transmitter under a condition that a charging electrode of the robot is in contact with a charging electrode of the charging pile; and triggering the first positioning circuit to stop transmitting the first request message, and triggering the second positioning circuit to stop transmitting the second request message under a condition that the signal receiver cannot receive the signal transmitted by the signal transmitter, and transmitting a guidance ending instruction to the robot.

In some embodiments, the determining a first distance between the robot and the first positioning circuit comprises: extracting a first transmitting time of the first positioning circuit for transmitting the first request message and a first receiving time of the first positioning circuit for receiving the first response message; and calculating the first distance according to the difference between the first receiving time and the first transmitting time.

In some embodiments, the determining a first distance between the robot and the first positioning circuit further comprises: extracting a second receiving time of the robot for receiving the first request message and a second transmitting time of the robot for transmitting the first response message from the first response message; wherein the calculating the first distance comprises: calculating a first difference between the first receiving time and the first transmitting time, and a second difference between the second transmitting time and the second receiving time; and calculating the first distance according to a difference between the first difference and the second difference.

In some embodiments, the determining a second distance between the robot and the second positioning circuit comprises: extracting a third transmitting time of the second positioning circuit for transmitting the second request message, and a third receiving time of the second positioning circuit for receiving the second response message; and calculating the second distance according to a difference between the third receiving time and the third transmitting time.

In some embodiments, the determining a second distance between the robot and the second positioning circuit further comprises: extracting a fourth receiving time of the robot for receiving the second request message and a fourth transmitting time of the robot for transmitting the second response message from the second response message; wherein the calculating the second distance comprises: calculating a third difference between the third receiving time and the third transmitting time, and a fourth difference between the fourth transmitting time and the fourth receiving time; and calculating the second distance according to a difference between the third difference and the fourth difference.

In some embodiments, the determining a position of the robot relative to the charging pile according to the first distance and the second distance comprises: determining a first circular trajectory by taking a position of the first positioning circuit as a circle center and the first distance as a radius; determining a second circular trajectory by taking a position of the second positioning circuit as a circle center and the second distance as a radius; and taking the intersection point of the first circular trajectory and the second circular trajectory as the position of the robot relative to the charging pile.

According to a second aspect of an embodiment of the present disclosure, there is provided a control device for providing guidance, comprising: a triggering module configured to trigger a first positioning circuit to transmit a first request message at a preset period, and trigger a second positioning circuit to transmit a second request message at the preset period after receiving a guidance request message transmitted by a robot, thereby the robot transmitting a first response message after receiving the first request message, and transmitting a second response message after receiving the second request message; a first distance determining module configured to determine a first distance between the robot and the first positioning circuit according to a time delay between the first positioning circuit transmitting the first request message and receiving the first response message after the first positioning circuit receiving the first response message; a second distance determining module configured to determine a second distance between the robot and the second positioning circuit according to a time delay between the second positioning circuit transmitting the second request message and receiving the second response message after the second positioning circuit receiving the second response message; a position determining module configured to determine a position of the robot relative to the charging pile according to the first distance and the second distance; and a guiding module configured to transmit information about the position to the robot, thereby the robot adjusting a path according to the position to complete the docking of the robot to the charging pile.

According to a third aspect of the embodiments of the present disclosure, there is provided a control device for providing guidance, comprising: a processor; and a memory coupled to the processor, storing program instructions which, when executed by the processor, cause the processor to implement the control method according to any one of the embodiments described above.

According to a fourth aspect of the embodiments of the present disclosure, there is provided a charging pile, comprising: the control device for providing guidance according to any one of the embodiments described above; a first communicating circuit configured to transmit a guidance request transmitted by a robot to the control device for providing guidance and transmit information about a position determined by the control device for providing guidance to the robot; a first positioning circuit configured to transmit a first request message at a preset period according to a trigger instruction transmitted by the control device for providing guidance and receive a first response message transmitted by the robot upon receiving the first request message; and a second positioning circuit configured to transmit a second request message at a preset period according to a trigger instruction transmitted by the control device for providing guidance, and receive the second response message transmitted by the robot upon receiving the second request message.

In some embodiments, further comprising: a signal transmitter; a signal receiver configured to receive a signal transmitted by the signal transmitter, wherein the signal receiver cannot receive the signal transmitted by the signal transmitter under a condition that a charging electrode of the robot is in contact with a charging electrode of the charging pile.

In some embodiments, the first communicating circuit is further configured to transmit a guidance ending instruction transmitted by the guidance control device to the robot; the first positioning circuit is further configured to stop transmitting the first request message according to a trigger instruction transmitted by the control device for providing guidance; and the second positioning circuit is further configured to stop transmitting the second request message according to a trigger instruction transmitted by the control device for providing guidance.

According to a fifth aspect of an embodiment of the present disclosure, there is provided a control method for providing guidance performed by a robot control device, comprising: detecting whether the robot is currently in a preset guidance area in the process of approaching a charging pile; entering a guidance mode under a condition that the robot is currently in the preset guidance area; transmitting a guidance request message to the charging pile, thereby a third positioning circuit transmitting a first response message to the charging pile after receiving a first request transmitted by the charging pile, and transmitting a second response message to the charging pile after receiving a second request transmitted by the charging pile; adjusting a path according to a position after receiving information about the position transmitted by the charging pile; and driving a moving mechanism according to the path, thereby the robot docking to the charging pile.

In some embodiments, the first response message comprises a time of the third positioning circuit for receiving the first request message and a time of the third positioning circuit for transmitting the first response message; and the second response message comprises a time of the third positioning circuit for receiving the second request message and a time of the third positioning circuit for transmitting the second response message.

In some embodiments, further comprising: exiting the guidance mode under a condition that a guidance ending instruction transmitted by the charging pile is received.

According to a sixth aspect of an embodiment of the present disclosure, there is provided a robot control device comprising: a mode converting module configured to detect whether the robot is currently in a preset guidance area in the process of approaching a charging pile, and enter a guidance mode under a condition that the robot is currently in the preset guidance area; a guidance requesting module configured to transmit a guidance request message to the charging pile, thereby a third positioning circuit transmitting a first response message to the charging pile after receiving a first request transmitted by the charging pile, and transmitting a second response message to the charging pile after receiving a second request transmitted by the charging pile; a path adjusting module configured to adjust a path according to a position after receiving information about the position transmitted by the charging pile; and a driving module configured to drive a moving mechanism according to the path, thereby the robot docking to the charging pile.

According to a seventh aspect of the embodiments of the present disclosure, there is provided a robot control device comprising: a processor; and a memory coupled to the processor, storing program instructions which, when executed by the processor, cause the processor to implement the control method according to any one of the embodiments described above.

According to an eighth aspect of the embodiments of the present disclosure, there is provided a robot comprising: a robot control device according to any one of the embodiments described above; a second communicating circuit configured to transmit a guidance request message transmitted by the robot control device to a charging pile, and transmit information about a position transmitted by the charging pile to the robot control device; a third positioning circuit configured to transmit a first response message to the charging pile after receiving a first request transmitted by the charging pile, and transmit a second response message to the charging pile after receiving a second request transmitted by the charging pile; and a moving mechanism configured to drive the robot to move according to a path provided by the robot control device.

According to a ninth aspect of the embodiments of the present disclosure, there is provided a non-transitory computer-readable storage medium, wherein the non-transitory computer readable storage medium stores computer instructions which, when executed by a processor, implement the control method according to any one of the embodiments described above.

Other features of the present disclosure and advantages thereof will become apparent from the following detailed description of exemplary embodiments thereof, which proceeds with reference to the accompanying drawings.

**BRIEF DESCRIPTION OF THE DRAWINGS**

In order to more clearly illustrate the technical solutions in the embodiments of the present disclosure or the prior art, the drawings used in the embodiments or the description of the prior art will be briefly described below, it is obvious that the drawings in the following description are only some embodiments of the present disclosure, and for those skilled in the art, other drawings may be obtained according to the drawings without inventive labor.

Fig. 1 is a schematic flow diagram of a control method for providing guidance according to one embodiment of the present disclosure;
Fig. 2 is a schematic diagram of robot performing positioning according to one embodiment of the present disclosure;
Fig. 3 is a schematic structural diagram of a control device for providing guidance according to one embodiment of the present disclosure;
Fig. 4 is a schematic structural diagram of a control device for providing guidance according to another embodiment of the present disclosure;

Fig. 5 is a schematic structural diagram of a charging pile according to one embodiment of the present disclosure;

Fig. 6 is a flow chart illustrating a control device for providing guidance according to another embodiment of the present disclosure;

Fig. 7 is a schematic structural diagram of a robot control device according to one embodiment of the present disclosure;

Fig. 8 is a schematic structural diagram of a robot control device according to another embodiment of the present disclosure;

Fig. 9 is a schematic structural diagram of a robot according to one embodiment of the present disclosure.

## DETAILED DESCRIPTION

The technical solutions in the embodiments of the present disclosure will be described clearly and completely with reference to the drawings in the embodiments of the present disclosure, and it is obvious that the embodiments described are only some, rather than all, of the embodiments of the present disclosure. The following description of at least one exemplary embodiment is merely illustrative in nature and is in no way intended to limit the disclosure, its application, or uses. All other embodiments, which can be derived by a person skilled in the art from the embodiments disclosed herein without inventive step, are intended to be within the scope of the present disclosure.

The relative arrangement of parts and steps, numerical expressions and numerical values set forth in these embodiments do not limit the scope of the present disclosure unless specifically stated otherwise.

Meanwhile, it should be understood that the sizes of the respective portions shown in the drawings are not drawn in an actual proportional relationship for the convenience of description.

Techniques, methods, and devices known to one of ordinary skill in the art may not be discussed in detail but are intended to be part of the specification where appropriate.

In all examples shown and discussed herein, any particular value should be construed as exemplary only and not as limiting. Thus, other examples of the exemplary embodiments may have different values.

It should be noted that similar reference numbers and letters refer to similar items in the following figures, and thus, once an item is defined in one figure, it need not be discussed further in subsequent figures.

The inventors found through research that in the related art, the robot cannot accurately determine the position of the charging pile in the process that the robot gets back to the pile, and consequently the robot fails to get back to the pile.

In view of the above, this disclosure provides a guidance control scheme, which can ensure that the robot gets back to the charging pile fast and accurately for charging.

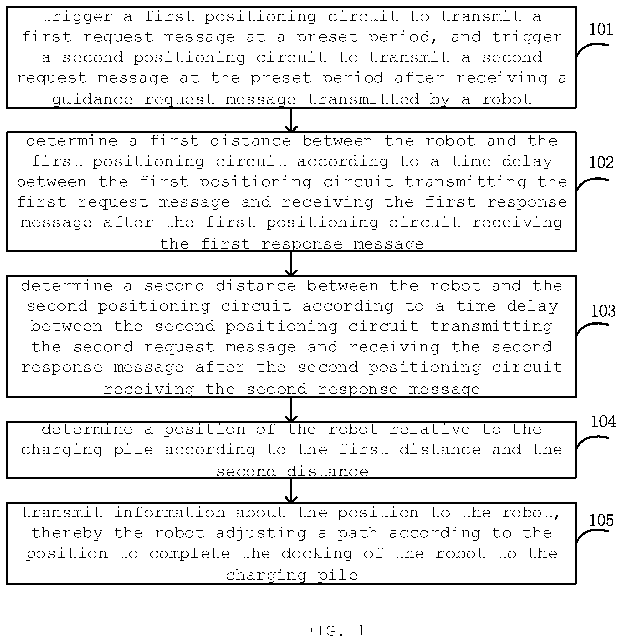

Fig. 1 is a flow diagram illustrating a control method for providing guidance according to one embodiment of the disclosure. In some embodiments, the following steps of the control method for providing guidance are performed by a control device for providing guidance in the charging pile.

In step 101, a first positioning circuit is triggered to transmit a first request message at a preset period, and a second positioning circuit is triggered to transmit a second request message at the preset period after a guidance request message transmitted by a robot is received, thereby the robot transmitting a first response message after receiving the first request message, and transmitting a second response message after receiving the second request message.

The robot detects whether the robot is currently in a preset guidance area in the process of approaching the charging pile. Under a condition that the robot is in the preset guidance area at present, the robot transmits a guidance request message to the charging pile.

In step 102, a first distance between the robot and the first positioning circuit is determined according to a time delay between the first positioning circuit transmitting the first request message and receiving the first response message after the first positioning circuit receiving the first response message.

In some embodiments, by extracting a first transmitting time at which the first request message is transmitted by the first positioning circuit and a first receiving time at which the first response message is received by the first positioning circuit, the first distance is calculated from a difference between the first receiving time and the first transmitting time.

For example, if the first transmitting time is Tb1 and the first receiving time is Tb2, the first distance R1 is $R1=c\times[Tb2-Tb1]/2$, and c is the electromagnetic wave propagation speed.

In some embodiments, a second receiving time at which the robot receives the first request message and a second transmitting time at which the robot transmits the first response message are extracted from the first response message. Next, a first difference between the first receiving time and the first transmitting time and a second difference between the second transmitting time and the second receiving time are calculated, and the first distance is calculated based on a difference between the first difference and the second difference.

For example, if the first transmitting time is Tb1, the first receiving time is Tb2, the second receiving time is Tba1, and the second transmitting time is Tba2, therefore the first distance R1 is $R1=c\times[(Tb2-Tb1)-(Tba2-Tba1)]/2$.

In step 103, a second distance between the robot and the second positioning circuit is determined according to a time delay between the second positioning circuit transmitting the second request message and receiving the second response message after the second positioning circuit receiving the second response message.

In some embodiments, by extracting a third transmitting time at which the second request message is transmitted by the second positioning circuit and a third receiving time at which the second response message is received by the second positioning circuit, the second distance is calculated from a difference between the third receiving time and the third transmitting time.

For example, if the third transmitting time is Tc1 and the third receiving time is Tc2, the second distance R2 is $R2=c\times[Tc2-Tc1]/2$.

In some embodiments, a fourth receiving time at which the robot receives the second request message and a fourth transmitting time at which the robot transmits the second response message are extracted from the second response message. Next, by calculating a third difference between the third receiving time and the third transmitting time, and a fourth difference between the fourth transmitting time and the fourth receiving time, a second distance is calculated from a difference between the third difference and the fourth difference.

For example, if the third transmitting time is Tc1, the third receiving time is Tc2, the fourth receiving time is Tca1, and the fourth transmitting time is Tca2, therefore the second distance R2 is $R2=c\times[(Tc2-Tc1)-(Tca2-Tca1)]/2$.

In step 104, a position of the robot relative to the charging pile is determined according to the first distance and the second distance.

In some embodiments, a first circular trajectory is determined by taking a position of the first positioning circuit as a circle center and a first distance as a radius, and a second circular trajectory is determined by taking a position of the second positioning circuit as a circle center and a second distance as a radius. An intersection point of the first circular trajectory and the second circular trajectory is taken as the position of the robot relative to the charging pile.

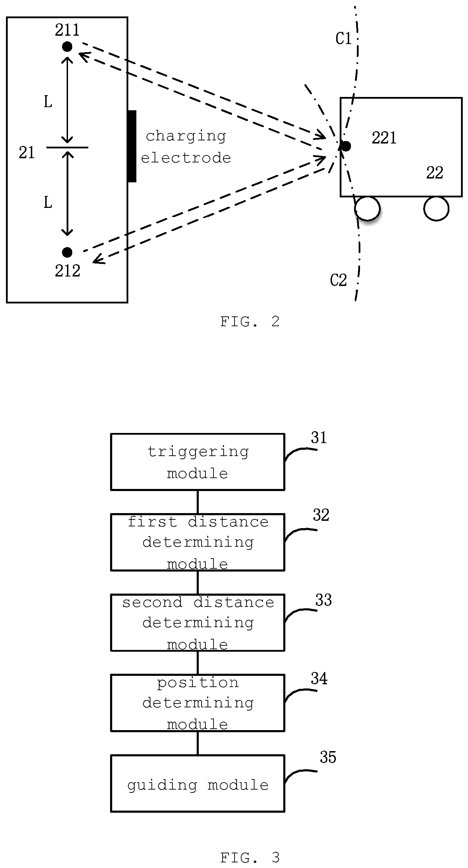

Fig. 2 is a schematic diagram of a robot performing positioning according to one embodiment of the present disclosure.

As shown in Fig. 2, the charging pile 21 is provided with a first positioning circuit 211 and a second positioning circuit 212. The robot 22 is provided with a third positioning circuit 221. According to the above processing, it can be determined that the distance between the robot 22 and the first positioning circuit 211 is R1 and the distance between the robot 22 and the second positioning circuit 212 is R2. The robot 22 is located on a circular trajectory C1 by taking the first positioning circuit 211 as a circle center and R1 as a radius, and also located on a circular trajectory C2 by taking the second positioning circuit 212 as a circle center and R2 as a radius. The relative position (X, Y) of the robot with respect to the charging pile can be determined by calculating the intersection point of the two circular trajectories using the following formula, in which the distance between the first positioning circuit 211 and the second positioning circuit 212 is 2L.

$$X^2+(Y-L)^2=R1^2$$

$$X^2+(Y+L)^2=R2^2$$

At step 105, information about the position is transmitted to the robot, thereby the robot adjusting a path according to the position to complete the docking of the robot to the charging pile.

In the control method for providing guidance provided in the embodiments mentioned above of the disclosure, the charging pile interacts with the robot to determine the position of the robot relative to the charging pile, and the robot timely adjusts the path according to the position, to make sure that the robot returns to the charging pile quickly and accurately for charging.

In some embodiments, it is detected whether the signal receiver can receive the signal transmitted by the signal transmitter, wherein the signal receiver cannot receive the signal transmitted by the signal transmitter under a condition that the charging electrode of the robot is in contact with the charging electrode of the charging pile. If the signal receiver cannot receive the signal transmitted by the signal transmitter, which means that that the charging electrode of the robot is in contact with the charging electrode of the charging pile, in this case, the first positioning circuit is triggered to stop transmitting the first request message, and the second positioning circuit is triggered to stop transmitting the second request message, and a guidance ending instruction is transmitted to the robot.

Fig. 3 is a schematic structural diagram of a control device for providing guidance according to one embodiment of the present disclosure. As shown in Fig. 3, the control device for providing guidance includes a triggering module 31, a first distance determining module 32, a second distance determining module 33, a position determining module 34, and a guiding module 35.

The triggering module 31 is configured to trigger a first positioning circuit to transmit a first request message at a preset period, and trigger a second positioning circuit to transmit a second request message at the preset period after receiving a guidance request message transmitted by a robot, thereby the robot transmitting a first response message after receiving the first request message, and transmitting a second response message after receiving the second request message.

The first distance determining module 32 is configured to determine a first distance between the robot and the first positioning circuit according to a time delay between the first positioning circuit transmitting the first request message and receiving the first response message after the first positioning circuit receiving the first response message.

In some embodiments, by extracting the first transmitting time at which the first request message is transmitted by the first positioning circuit and the first receiving time at which the first response message is received by the first positioning circuit, the first distance determining module 32 calculates the first distance based on a difference between a first receiving time and a first transmitting time.

In some embodiments, the first distance determining module 32 extracts a second receiving time when the robot receives the first request message and a second transmitting time when the robot transmits the first response message from the first response message. Next, a first difference between the first receiving time and the first transmitting time and a second difference between the second transmitting time and the second receiving time are calculated, and the first distance is calculated based on a difference between the first difference and the second difference.

The second distance determining module 33 is configured to determine a second distance between the robot and the second positioning circuit according to a time delay between the second positioning circuit transmitting the second request message and receiving the second response message after the second positioning circuit receiving the second response message.

In some embodiments, by extracting the third transmitting time at which the second request message is transmitted by the second positioning circuit and a third receiving time at which the second response message is received by the second positioning circuit, the second distance determining module 33 calculates the second distance according to a difference between a third receiving time and a third transmitting time.

In some embodiments, the second distance determining module 33 extracts a fourth receiving time at which the robot receives the second request message and a fourth transmitting time at which the robot transmits the second response message from the second response message. Next, by calculating a third difference between the third receiving time and the third transmitting time and a fourth difference between the fourth transmitting time and the fourth receiving time, a second distance is calculated from a difference between the third difference and the fourth difference.

A position determining module 34 is configured to determine a position of the robot relative to the charging pile according to the first distance and the second distance.

In some embodiments, the position determining module 34 determines a first circular trajectory by taking the position of the first positioning circuit as a circle center and the first distance as a radius, and determines the second circular trajectory by taking the position of the second positioning circuit as a circle center and the second distance as a radius. The intersection point of the first circular trajectory and the second circular trajectory is taken as the position of the robot relative to the charging pile.

A guiding module 35 is configured to transmit information about the position to the robot, thereby the robot adjusting a path according to the position to complete the docking of the robot to the charging pile.

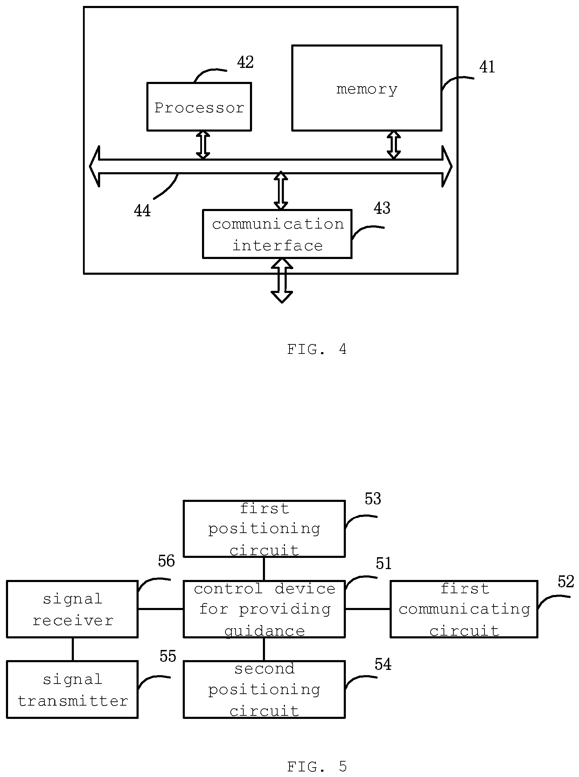

Fig. 4 is a schematic structural diagram of a control device for providing guidance according to another embodiment of the present disclosure. As shown in Fig. 4, the control device for providing guidance includes a memory 41 and a processor 42.

The memory 41 is used for storing instructions, and the processor 42 is coupled to the memory 41, and the processor 42 is configured to carry out the method according to any embodiment in Fig. 1 based on the instructions stored in the memory.

As shown in Fig. 4, the control device for providing guidance further includes a communication interface 43 for information interaction with other devices. Meanwhile, the control device for providing guidance further comprises a bus 44, and the processor 42, the communication interface 43 and the memory 41 are communicated with each other through the bus 44.

The memory 41 may comprise high-speed RAM memory, and may also include non-volatile memory, such as at least one disk memory. The memory 41 may also be a memory array. The memory 41 may also be partitioned into blocks, and the blocks may be combined into virtual volumes according to certain rules.

Further, the processor 42 may be a central processing unit (CPU), or may be an application specific integrated circuit (ASIC), or one or more integrated circuits configured to implement embodiments of the present disclosure.

The present disclosure also relates to a non-transitory computer-readable storage medium for storing computer instructions which, when executed by a processor, implement the method according to any one of the embodiments in Fig. 1.

Fig. 5 is a schematic structural diagram of a charging pile according to an embodiment of the disclosure. As shown in Fig. 5, the charging pile includes a control device for providing guidance 51, a first communicating circuit 52, a first positioning circuit 53, and a second positioning circuit 54. The control device for providing guidance 51 is the control device for providing guidance according to any one of the embodiments of Fig. 3 or 4.

The first communicating circuit 52 is configured to transmit a guidance request transmitted by the robot to the control device for providing guidance 51, and also transmit information about the position determined by the control device for providing guidance 51 to the robot.

The first positioning circuit 53 is configured to transmit a first request message at a predetermined cycle according to a trigger instruction transmitted by the guidance control device 51, and receive a first response message transmitted by the robot upon receiving the first request message.

The second positioning circuit 54 is configured to transmit a second request message at a predetermined cycle according to a trigger instruction transmitted by the control device for providing guidance 51, and receive a second response message transmitted by the robot upon receiving the second request message.

In some embodiments, the first communicating circuit 52 communicates using a Lora communication technology, and the first positioning circuit 53 and the second positioning circuit 54 use a UWB (Ultra-Wide Band) communication technology.

In some embodiments, as shown in Fig. 5, the charging pile further includes a signal transmitter 55 and a signal receiver 56.

The signal receiver 56 is configured to receive the signal transmitted by the signal transmitter 55. Under a condition taht the charging electrode of the robot is in contact with the charging electrode of the charging pile, the signal receiver 56 cannot receive the signal transmitted by the signal transmitter 55.

In some embodiments, the signal transmitter 55 transmits an infrared signal and the signal receiver 56 receives an infrared signal.

In some embodiments, the first communicating circuit 52 is further configured to transmit the guidance ending instruction transmitted by the guidance control device 51 to the robot. The first positioning circuit 53 is also configured to stop transmitting the first request message according to a trigger instruction of the control device for providing guidance 51. The second positioning circuit 54 is further configured to stop transmitting the second request message according to a trigger instruction transmitted by the control device for providing guidance 51.

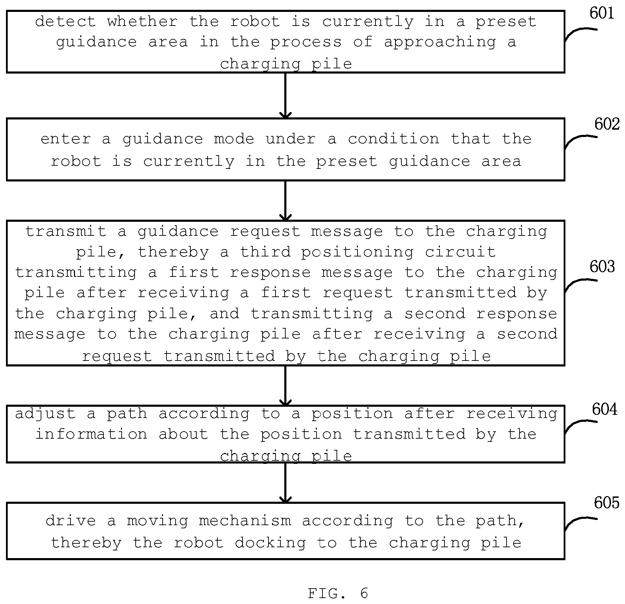

Fig. 6 is a flow diagram illustrating a control method for providing guidance according to another embodiment of the disclosure. In some embodiments, the following steps of the control method for providing guidance are performed by a robot control device in the robot.

In step 601, it is detected whether the robot is in a preset guidance area in the process that the robot approaches to the charging pile.

In step 602, a guidance mode is entered under a condition that the robot is currently in the preset guidance area.

In step 603, a guidance request message is transmitted to the charging pile, such that the third positioning circuit transmits a first response message to the charging pile after receiving a first request transmitted by the charging pile, and transmits a second response message to the charging pile after receiving the second request transmitted by the charging pile.

In some embodiments, the first response message comprises a time of the third positioning circuit for receiving the first request message and a time of the third positioning circuit for transmitting the first response message. The second response message comprises a time of the third positioning circuit for receiving the second request message and a time of the third positioning circuit for transmitting the second response message.

In step 604, a path is adjusted according to the position after information about the path transmitted by the charging pile is received.

In step 605, the moving mechanism is driven according to the adjusted path, such that the robot performs docking to the charging pile.

In some embodiments, the guidance mode is exited under a condition that a guidance ending instruction transmitted by the charging pile is received.

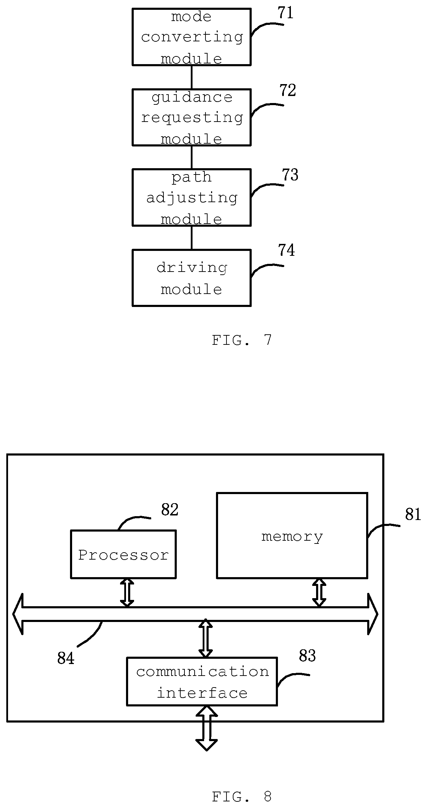

Fig. 7 is a schematic structural diagram of a robot control device according to one embodiment of the present disclosure. As shown in Fig. 7, the robot control device includes a mode converting module 71, a guidance requesting module 72, a path adjusting module 73, and a driving module 74.

The mode converting module 71 is configured to detect whether the robot is currently in a preset guidance area in the process of approaching a charging pile, and enter a guidance mode under a condition that the robot is currently in the preset guidance area.

The guidance request module 72 is configured to transmit a guidance request message to the charging pile, thereby a third positioning circuit transmitting a first response message to the charging pile after receiving a first request transmitted by the charging pile, and transmitting a second response message to the charging pile after receiving a second request transmitted by the charging pile.

In some embodiments, the first response message comprises a time of the third positioning circuit for receiving the first request message and a time of the third positioning circuit for transmitting the first response message. The second response message comprises a time of the third positioning circuit for receiving the second request message and a time of the third positioning circuit for transmitting the second response message.

The route adjusting module 73 is configured to adjust a path according to a position after receiving information about the position transmitted by the charging pile.

The drive module 74 is configured to drive a moving mechanism according to the path, thereby the robot docking to the charging pile.

In some embodiments, if the mode converting module 71 receives a guidance ending instruction transmitted by the charging pile, the mode converting module 71 exits the guidance mode.

Fig. 8 is a schematic structural diagram of a robot control device according to another embodiment of the present disclosure. As shown in Fig. 8, the robot control device includes a memory 81, a processor 82, a communication interface 83, and a bus 84. Fig. 8 differs from Fig. 4 in that, in the embodiment shown in Fig. 8, the processor 82 is configured to perform the method in any of the embodiments of Fig. 6 based on instructions stored in the memory.

The present disclosure also relates to a non-transitory computer-readable storage medium storing computer instructions which, when executed by a processor, implement the method according to any one of the embodiments in Fig. 6.

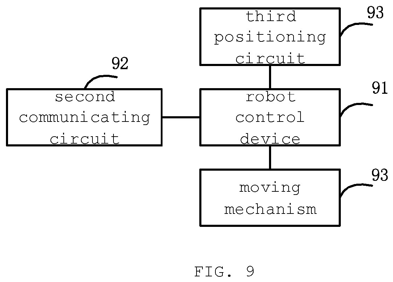

Fig. 9 is a schematic structural diagram of a robot according to an embodiment of the present disclosure. As shown in Fig. 9, the robot includes a robot control device 91, a second communicating circuit 92, a third positioning circuit 93, and a moving mechanism 94. The robot control device 91 is the robot control device according to any one of the embodiments of Fig. 7 and 8.

The second communicating circuit 92 is configured to transmit a guidance request message transmitted by the robot control device 91 to a charging pile, and transmit information about a position transmitted by the charging pile to the robot control device 91.

The third positioning circuit 93 is configured to transmit a first response message to the charging pile after receiving a first request transmitted by the charging pile, and transmit a second response message to the charging pile after receiving a second request transmitted by the charging pile.

In some embodiments, the first response message comprises a time of the third positioning circuit for receiving the first request message and a time of the third positioning circuit for transmitting the first response message. The second response message comprises a time of the third positioning circuit for receiving the second request message and a time of the third positioning circuit for transmitting the second response message.

In some embodiments, the second communicating circuit 92 adopts Lora communication technology for communicating, and the third positioning circuit 93 adopts UWB communication technology.

The moving mechanism 94 is configured to drive the robot to move according to a path provided by the robot control device.

In some embodiments, the functional unit modules described above can be implemented as a general purpose processor, a programmable logic controller (PLC), a digital signal processor (DSP), an application specific integrated circuit (ASIC), a field programmable gate array (FPGA) or other programmable logic device, discrete gate or transistor logic, discrete hardware components, or any suitable combination thereof for performing the functions described in this disclosure.

It will be understood by those skilled in the art that all or part of the steps for implementing the above embodiments may be implemented by hardware, or may be implemented by hardware related to instructions of a program, where the program may be stored in a non-transitory computer readable storage medium, and the storage medium may be a read-only memory, a magnetic disk or an optical disk.

The description of the present disclosure has been presented for purposes of illustration and description, and is not intended to be exhaustive or limited to the disclosure in the form disclosed. Many modifications and variations will be apparent to practitioners skilled in this art. The embodiment was chosen and described in order to best explain the principles of the disclosure and the practical application, and to enable others of ordinary skill in the art to understand the disclosure for various embodiments with various modifications as are suited to the particular use contemplated.

**Claims**

1. A control method for providing guidance performed by a control device for providing guidance (51) in a charging pile (21), comprising:

   triggering a first positioning circuit (53, 211) to transmit a first request message at a preset period, and triggering a second positioning circuit (54, 212) to transmit a second request message at the preset period after receiving a guidance request message transmitted by a robot (22), thereby the robot (22) transmitting a first response message after receiving the first request message, and transmitting a second response message after receiving the second request message;

   determining a first distance between the robot (22) and the first positioning circuit (53, 211) according to a time delay between the first positioning circuit (53, 211) transmitting the first request message and receiving the first response message after the first positioning circuit (53, 211) receiving the first response message;

   determining a second distance between the robot (22) and the second positioning circuit (54, 212) according to a time delay between the second positioning circuit (54, 212) transmitting the second request message and receiving the second response message after the second positioning circuit (54, 212) receiving the second response message;

   determining a position of the robot relative to the charging pile (21) according to the first distance and the second distance;

   transmitting information about the position to the robot (22), thereby the robot (22) adjusting a path according to the position to complete the docking of the robot (22) to the charging pile;

   detecting whether a signal receiver (56) receive a signal transmitted by a signal transmitter (55), wherein the signal receiver (56) cannot receive the signal transmitted by the signal transmitter (55) under a condition that a charging electrode of the robot (22) is in contact with a charging electrode of the charging pile (21); and

triggering the first positioning circuit (53, 211) to stop transmitting the first request message, and triggering the second positioning circuit (54, 212) to stop transmitting the second request message under a condition that the signal receiver (56) cannot receive the signal transmitted by the signal transmitter (55), and transmitting a guidance ending instruction to the robot (22).

2. The control method according to claim 1, wherein the determining a first distance between the robot (22) and the first positioning circuit (53, 211) comprises:

extracting a first transmitting time of the first positioning circuit (53, 211) for transmitting the first request message and a first receiving time of the first positioning circuit (53, 211) for receiving the first response message; and calculating the first distance according to the difference between the first receiving time and the first transmitting time.

3. The control method according to claim 2, wherein the determining a first distance between the robot (22) and the first positioning circuit (53, 211) further comprises:

extracting a second receiving time of the robot (22) for receiving the first request message and a second transmitting time of the robot (22) for transmitting the first response message from the first response message;
wherein the calculating the first distance comprises:

calculating a first difference between the first receiving time and the first transmitting time, and a second difference between the second transmitting time and the second receiving time; and calculating the first distance according to a difference between the first difference and the second difference.

4. The control method according to claim 1, wherein the determining a second distance between the robot (22) and the second positioning circuit (54, 212) comprises:
extracting a third transmitting time of the second positioning circuit (54, 212) for transmitting the second request message, and a third receiving time of the second positioning circuit (54, 212) for receiving the second response message; and calculating the second distance according to a difference between the third receiving time and the third transmitting time.

5. The control method according to claim 4, wherein the determining a second distance between the robot (22) and the second positioning circuit (54, 212) further comprises:

extracting a fourth receiving time of the robot (22) for receiving the second request message and a fourth transmitting time of the robot (22) for transmitting the second response message from the second response message;
wherein the calculating the second distance comprises:

calculating a third difference between the third receiving time and the third transmitting time, and a fourth difference between the fourth transmitting time and the fourth receiving time; and calculating the second distance according to a difference between the third difference and the fourth difference.

6. The control method according to any one of claims 1-5, wherein the determining a position of the robot relative to the charging pile (21) according to the first distance and the second distance comprises:

determining a first circular trajectory by taking a position of the first positioning circuit (53, 211) as a circle center and the first distance as a radius; determining a second circular trajectory by taking a position of the second positioning circuit (54, 212) as a circle center and the second distance as a radius; and taking the intersection point of the first circular trajectory and the second circular trajectory as the position of the robot relative to the charging pile (21).

7. A control device for providing guidance (51), comprising:

a processor (42, 82); and a memory (41, 81) coupled to the processor (42, 82), storing program instructions which, when executed by the processor (42, 82), cause the processor (42, 82) to implement the control method of any of claims 1 to 6.

8. A charging pile (21), comprising:

the control device for providing guidance (51) according to claim 7;
a first communicating circuit (52) configured to transmit a guidance request transmitted by a robot (22) to the control device for providing guidance (51) and transmit information about a position determined by the control device for providing guidance (51) to the robot (22);

a first positioning circuit (53, 211) configured to transmit a first request message at a preset period according to a trigger instruction transmitted by the control device for providing guidance (51) and receive a first response message transmitted by the robot (22) upon receiving the first request message; and
a second positioning circuit (54, 212) configured to transmit a second request message at a preset period according to a trigger instruction transmitted by the control device for providing guidance (51), and receive the second response message transmitted by the robot (22) upon receiving the second request message.

9. The charging pole according to claim 8, further comprising a signal transmitter (55) and a signal receiver (56), wherein:

a signal receiver (56) is configured to receive a signal transmitted by the signal transmitter (55), wherein the signal receiver (56) cannot receive the signal transmitted by the signal transmitter (55) under a condition that a charging electrode of the robot (22) is in contact with a charging electrode of the charging pile (21);
the first communicating circuit (52) is further configured to transmit a guidance ending instruction transmitted by the guidance control device (51) to the robot (22);
the first positioning circuit (53, 211) is further configured to stop transmitting the first request message according to a trigger instruction transmitted by the control device for providing guidance (51); and
the second positioning circuit (54, 212) is further configured to stop transmitting the second request message according to a trigger instruction transmitted by the control device for providing guidance (51).

10. A non-transitory computer readable storage medium, wherein the non-transitory computer readable storage medium stores computer instructions which, when executed by a processor (42, 82), implement the control method of any of claims 1-6.

## Patentansprüche

1. Steuerverfahren zum Bereitstellen von Führung, das von einer Steuervorrichtung zum Bereitstellen von Führung (51) in einer Ladesäule (21) durchgeführt wird, umfassend:

Triggern einer ersten Positionierungsschaltung (53, 211), um eine erste Anforderungsnachricht in einer voreingestellten Periode zu übertragen,
und Triggern einer zweiten Positionierungsschaltung (54, 212), um eine zweite Anforderungsnachricht in der voreingestellten Periode zu übertragen nach dem Empfang einer Führungsanforderungsnachricht, die von einem Roboter (22) übertragen wird, wodurch der Roboter (22) eine erste Antwortnachricht nach dem Empfang der ersten Anforderungsnachricht überträgt und eine zweite Antwortnachricht nach dem Empfang der zweiten Anforderungsnachricht überträgt;
Bestimmen eines ersten Abstands zwischen dem Roboter (22) und der ersten Positionierungsschaltung (53, 211) gemäß einer Zeitverzögerung zwischen der ersten Positionierungsschaltung (53, 211), die die erste Anforderungsnachricht überträgt und die erste Antwortnachricht empfängt, nach dem Empfangen der ersten Antwortnachricht durch die erste Positionierungsschaltung (53, 211);
Bestimmen eines zweiten Abstands zwischen dem Roboter (22) und der zweiten Positionierungsschaltung (54, 212) gemäß einer Zeitverzögerung zwischen der zweiten Positionierungsschaltung (54, 212), die die zweite Anforderungsnachricht überträgt und die zweite Antwortnachricht empfängt, nach dem Empfangen der zweiten Antwortnachricht durch die zweite Positionierungsschaltung (54, 212);
Bestimmen einer Position des Roboters relativ zu der Ladesäule (21) gemäß dem ersten Abstand und dem zweiten Abstand;
Übertragen von Informationen über die Position an den Roboter (22), wodurch der Roboter (22) einen Pfad gemäß der Position einstellt, um das Andocken des Roboters (22) an die Ladesäule abzuschließen;
Detektieren, ob ein Signalempfänger (56) ein Signal empfängt, das von einem Signalsender (55) übertragen wird, wobei der Signalempfänger (56) das Signal, das von dem Signalsender (55) übertragen wird, unter einer Bedingung nicht empfangen kann, dass eine Ladeelektrode des Roboters (22) in Kontakt mit einer Ladeelektrode der Ladesäule (21) ist; und
Triggern der ersten Positionierungsschaltung (53, 211), um das Übertragen der ersten Anforderungsnachricht zu stoppen, und Triggern der zweiten Positionierungsschaltung (54, 212), um das Übertragen der zweiten Anforderungsnachricht zu stoppen, unter einer Bedingung, dass der Signalempfänger (56) das Signal, das von dem Signalsender (55) übertragen wird, nicht empfangen kann, und Übertragen einer Führungsbeendigungsanweisung an den Roboter (22).

2. Steuerverfahren nach Anspruch 1, wobei das Bestimmen eines ersten Abstands zwischen dem Roboter (22) und der ersten Positionierungsschaltung (53, 211) umfasst:

Extrahieren einer ersten Übertragungszeit der ersten Positionierungsschaltung (53, 211) zum Übertragen der ersten Anforderungsnachricht und einer ersten Empfangszeit der ersten Positionierungsschaltung (53, 211) zum Empfangen der ersten Antwortnachricht; und
Berechnen des ersten Abstands gemäß der Differenz zwischen der ersten Empfangszeit und der ersten Übertragungszeit.

3. Steuerverfahren nach Anspruch 2, wobei das Bestimmen eines ersten Abstands zwischen dem Roboter (22) und der ersten Positionierungsschaltung (53, 211) ferner umfasst:

Extrahieren einer zweiten Empfangszeit des Roboters (22) zum Empfangen der ersten Anforderungsnachricht und einer zweiten Übertragungszeit des Roboters (22) zum Übertragen der ersten Antwortnachricht aus der ersten Antwortnachricht;
wobei das Berechnen des ersten Abstands umfasst:

Berechnen einer ersten Differenz zwischen der ersten Empfangszeit und der ersten Übertragungszeit und einer zweiten Differenz zwischen der zweiten Übertragungszeit und der zweiten Empfangszeit; und
Berechnen des ersten Abstands gemäß einer Differenz zwischen der ersten Differenz und der zweiten Differenz.

4. Steuerverfahren nach Anspruch 1, wobei das Bestimmen eines zweiten Abstands zwischen dem Roboter (22) und der zweiten Positionierungsschaltung (54, 212) umfasst:
Extrahieren einer dritten Übertragungszeit der zweiten Positionierungsschaltung (54, 212) zum Übertragen der zweiten Anforderungsnachricht und einer dritten Empfangszeit der zweiten Positionierungsschaltung (54, 212) zum Empfangen der zweiten Antwortnachricht; und
Berechnen des zweiten Abstands gemäß einer Differenz zwischen der dritten Empfangszeit und der dritten Übertragungszeit.

5. Steuerverfahren nach Anspruch 4, wobei das Bestimmen eines zweiten Abstands zwischen dem Roboter (22) und der zweiten Positionierungsschaltung (54, 212) ferner umfasst:

Extrahieren einer vierten Empfangszeit des Roboters (22) zum Empfangen der zweiten Anforderungsnachricht und einer vierten Übertragungszeit des Roboters (22) zum Übertragen der zweiten Antwortnachricht aus der zweiten Antwortnachricht;
wobei das Berechnen des zweiten Abstands umfasst:

Berechnen einer dritten Differenz zwischen der dritten Empfangszeit und der dritten Übertragungszeit und einer vierten Differenz zwischen der vierten Übertragungszeit und der vierten Empfangszeit; und
Berechnen des zweiten Abstands gemäß einer Differenz zwischen der dritten Differenz und der vierten Differenz.

6. Steuerverfahren nach einem der Ansprüche 1-5, wobei das Bestimmen einer Position des Roboters relativ zu der Ladesäule (21) gemäß dem ersten Abstand und dem zweiten Abstand umfasst:

Bestimmen einer ersten kreisförmigen Trajektorie durch Nehmen einer Position der ersten Positionierungsschaltung (53, 211) als ein Kreiszentrum und des ersten Abstands als einen Radius;
Bestimmen einer zweiten kreisförmigen Trajektorie durch Nehmen einer Position der zweiten Positionierungsschaltung (54, 212) als ein Kreiszentrum und des zweiten Abstands als einen Radius; und
Nehmen des Schnittpunkts der ersten kreisförmigen Trajektorie und der zweiten kreisförmigen Trajektorie als die Position des Roboters relativ zu der Ladesäule (21).

7. Steuervorrichtung zum Bereitstellen von Führung (51), umfassend:

einen Prozessor (42, 82); und
einen Speicher (41, 81), der mit dem Prozessor (42, 82) gekoppelt ist und Programmanweisungen speichert, die, wenn sie von dem Prozessor (42, 82) ausgeführt werden, den Prozessor (42, 82) veranlassen, das Steuerverfahren nach einem der Ansprüche 1 bis 6 zu implementieren.

8. Ladesäule (21), umfassend:

die Steuervorrichtung zum Bereitstellen von Führung (51) nach Anspruch 7;
eine erste Kommunikationsschaltung (52), die konfiguriert ist, um eine Führungsanforderung, die von einem Roboter (22) übertragen wird, an die Steuervorrichtung zum Bereitstellen von Führung (51) zu übertragen und Informationen über eine Position, die von der Steuervorrichtung zum Bereitstellen von Führung (51) bestimmt wird, an den Roboter (22) zu übertragen; eine erste Positionierungsschaltung (53, 211), die konfiguriert ist, um eine erste Anforderungsnachricht in einer voreingestellten Periode gemäß einer Triggeranweisung, die von der Steuervorrichtung zum Bereitstellen von Führung (51) übertragen wird, zu übertragen und eine erste Antwortnachricht, die von dem Roboter (22) nach dem Empfangen der ersten Anforderungsnachricht übertragen wird, zu empfangen; und eine zweite Positionierungsschaltung (54, 212), die konfiguriert ist, um eine zweite Anforderungsnachricht in einer voreingestellten Periode gemäß einer Triggeranweisung, die von der Steuervorrichtung zum Bereitstellen von Führung (51) übertragen wird, zu übertragen und die zweite Antwortnachricht, die von dem Roboter (22) nach dem Empfangen der zweiten Anforderungsnachricht übertragen wird, zu empfangen.

9. Ladesäule nach Anspruch 8, ferner umfassend einen Signalsender (55) und einen Signalempfänger (56), wobei:

ein Signalempfänger (56) konfiguriert ist, um ein Signal zu empfangen, das von dem Signalsender (55) übertragen wird, wobei der Signalempfänger (56) das Signal, das von dem Signalsender (55) übertragen wird, unter einer Bedingung nicht empfangen kann, dass eine Ladeelektrode des Roboters (22) in Kontakt mit einer Ladeelektrode der Ladesäule (21) ist;

die erste Kommunikationsschaltung (52) ferner konfiguriert ist, um eine Führungsbeendigungsanweisung, die von der Führungssteuervorrichtung (51) übertragen wird, an den Roboter (22) zu übertragen;

die erste Positionierungsschaltung (53, 211) ferner konfiguriert ist, um das Übertragen der ersten Anforderungsnachricht gemäß einer Triggeranweisung, die von der Steuervorrichtung zum Bereitstellen von Führung (51) übertragen wird, zu stoppen; und

die zweite Positionierungsschaltung (54, 212) ferner konfiguriert ist, um das Übertragen der zweiten Anforderungsnachricht gemäß einer Triggeranweisung, die von der Steuervorrichtung zum Bereitstellen von Führung (51) übertragen wird, zu stoppen.

10. Nichtflüchtiges computerlesbares Speichermedium, wobei das nichtflüchtige computerlesbare Speichermedium Computeranweisungen speichert, die, wenn sie von einem Prozessor (42, 82) ausgeführt werden, das Steuerverfahren nach einem der Ansprüche 1 bis 6 implementieren.

## Revendications

1. Procédé de commande pour fournir un guidage effectué par un dispositif de commande pour fournir un guidage (51) dans une borne de recharge (21), comprenant :

le déclenchement d'un premier circuit de positionnement (53, 211) pour transmettre un premier message de demande à une période prédéfinie, et le déclenchement d'un second circuit de positionnement (54, 212) pour transmettre un second message de demande à la période prédéfinie après la réception d'un message de demande de guidage transmis par un robot (22), le robot (22) transmettant ainsi un premier message de réponse après la réception du premier message de demande, et transmettant un second message de réponse après la réception du second message de demande ;

la détermination d'une première distance entre le robot (22) et le premier circuit de positionnement (53, 211) en fonction d'un délai entre le premier circuit de positionnement (53, 211) transmettant le premier message de demande et recevant le premier message de réponse après que le premier circuit de positionnement (53, 211) a reçu le premier message de réponse ;

la détermination d'une seconde distance entre le robot (22) et le second circuit de positionnement (54, 212) en fonction d'un délai entre le second circuit de positionnement (54, 212) transmettant le second message de demande et recevant le second message de réponse après que le second circuit de positionnement (54, 212) a reçu le second message de réponse ;

la détermination d'une position du robot par rapport à la borne de recharge (21) en fonction de la première distance et de la seconde distance ;

la transmission d'informations concernant la position au robot (22), le robot (22) ajustant ainsi un trajet en fonction de la position pour achever l'amarrage du robot (22) à la borne de recharge ;

la détection si un récepteur de signal (56) reçoit un signal transmis par un émetteur de signal (55), dans lequel le récepteur de signal (56) ne peut pas recevoir le signal transmis par l'émetteur de signal (55) à condition qu'une électrode de recharge du robot (22) soit en contact avec une électrode de recharge de la borne de recharge (21) ; et

le déclenchement du premier circuit de positionnement (53, 211) pour arrêter la transmission du premier message de demande, et le déclenchement du second circuit de positionnement (54, 212) pour arrêter la transmission du second message de demande à condition que le récepteur de signal (56) ne puisse pas recevoir le signal transmis par l'émetteur de signal (55), et la transmission d'une instruction de fin de guidage au robot (22).

2. Procédé de commande selon la revendication 1, dans lequel la détermination d'une première distance entre le robot (22) et le premier circuit de positionnement (53, 211) comprend :

l'extraction d'un premier temps de transmission du premier circuit de positionnement (53, 211) pour transmettre le premier message de demande et d'un premier temps de réception du premier circuit de positionnement (53, 211) pour recevoir le premier message de réponse ; et le calcul de la première distance en fonction de la différence entre le premier temps de réception et le premier temps de transmission.

3. Procédé de commande selon la revendication 2, dans lequel la détermination d'une première distance entre le robot (22) et le premier circuit de positionnement (53, 211) comprend en outre :

l'extraction d'un second temps de réception du robot (22) pour recevoir le premier message de demande et d'un second temps de transmission du robot (22) pour transmettre le premier message de réponse à partir du premier message de réponse ; dans lequel le calcul de la première distance comprend :

le calcul d'une première différence entre le premier temps de réception et le premier temps de transmission, et d'une seconde différence entre le second temps de transmission et le second temps de réception ; et le calcul de la première distance en fonction d'une différence entre la première différence et la seconde différence.

4. Procédé de commande selon la revendication 1, dans lequel la détermination d'une seconde distance entre le robot (22) et le second circuit de positionnement (54, 212) comprend :

l'extraction d'un troisième temps de transmission du second circuit de positionnement (54, 212) pour transmettre le second message de demande, et d'un troisième temps de réception du second circuit de positionnement (54, 212) pour recevoir le second message de réponse ; et le calcul de la seconde distance en fonction d'une différence entre le troisième temps de réception et le troisième temps de transmission.

5. Procédé de commande selon la revendication 4, dans lequel la détermination d'une seconde distance entre le robot (22) et le second circuit de positionnement (54, 212) comprend en outre :

l'extraction d'un quatrième temps de réception du robot (22) pour recevoir le second message de demande et d'un quatrième temps de transmission du robot (22) pour transmettre le second message de réponse à partir du second message de réponse ; dans lequel le calcul de la seconde distance comprend :

le calcul d'une troisième différence entre le troisième temps de réception et le troisième temps de transmission, et d'une quatrième différence entre le quatrième temps de transmission et le quatrième temps de réception ; et le calcul de la seconde distance en fonction d'une différence entre la troisième différence et la quatrième différence.

6. Procédé de commande selon l'une quelconque des revendications 1 à 5, dans lequel la détermination d'une position du robot par rapport à la borne de recharge (21) en fonction de la première distance et de la seconde distance comprend :

la détermination d'une première trajectoire circulaire en prenant une position du premier circuit de positionnement (53, 211) comme centre de cercle et la première distance comme rayon ; la détermination d'une seconde trajectoire circulaire en prenant une position du second circuit de positionnement (54, 212) comme centre de cercle et la seconde distance comme rayon ; et la prise du point d'intersection de la première trajectoire circulaire et de la seconde trajectoire circulaire comme position du robot par rapport à la borne de recharge (21).

7. Dispositif de commande pour fournir un guidage (51), comprenant :

un processeur (42, 82) ; et une mémoire (41, 81) couplée au processeur (42, 82), stockant des instructions de programme qui, lorsqu'elles sont exécutées par le processeur (42, 82), amènent le processeur (42, 82) à mettre en œuvre le procédé de commande selon l'une quelconque des revendications 1 à 6.

8. Borne de recharge (21), comprenant :

le dispositif de commande pour fournir un guidage (51) selon la revendication 7 ;

un premier circuit de communication (52) configuré pour transmettre une demande de guidage transmise par un robot (22) au dispositif de commande pour fournir un guidage (51) et transmettre des informations concernant une position déterminée par le dispositif de commande pour fournir un guidage (51) au robot (22) ;

un premier circuit de positionnement (53, 211) configuré pour transmettre un premier message de demande à une période prédéfinie selon une instruction de déclenchement transmise par le dispositif de commande pour fournir un guidage (51) et recevoir un premier message de réponse transmis par le robot (22) lors de la réception du premier message de demande ; et

un second circuit de positionnement (54, 212) configuré pour transmettre un second message de demande à une période prédéfinie selon une instruction de déclenchement transmise par le dispositif de commande pour fournir un guidage (51), et recevoir le second message de réponse transmis par le robot (22) lors de la réception du second message de demande.

9. Borne de recharge selon la revendication 8, comprenant en outre un émetteur de signal (55) et un récepteur de signal (56), dans laquelle :

un récepteur de signal (56) est configuré pour recevoir un signal transmis par l'émetteur de signal (55), dans lequel le récepteur de signal (56) ne peut pas recevoir le signal transmis par l'émetteur designal (55) à condittion qu'une électrode de recharge du robot (22) soit en contact avec une électrode de recharge de la borne de recharge (21) ;

le premier circuit de communication (52) est en outre configuré pour transmettre une instruction de fin de guidage transmise par le dispositif de commande de guidage (51) au robot (22) ;

le premier circuit de positionnement (53, 211) est en outre configuré pour arrêter la transmission du premier message de demande selon une instruction de déclenchement transmise par le dispositif de commande pour fournir un guidage (51) ; et

le second circuit de positionnement (54, 212) est en outre configuré pour arrêter la transmission du second message de demande selon une instruction de déclenchement transmise par le dispositif de commande pour fournir un guidage (51).

10. Support de stockage non transitoire lisible par ordinateur, dans lequel le support de stockage non transitoire lisible par ordinateur stocke des instructions informatiques qui, lorsqu'elles sont exécutées par un processeur (42, 82), mettent en œuvre le procédé de commande selon l'une quelconque des revendications 1 à 6.

trigger a first positioning circuit to transmit a first request message at a preset period, and trigger a second positioning circuit to transmit a second request message at the preset period after receiving a guidance request message transmitted by a robot — 101

determine a first distance between the robot and the first positioning circuit according to a time delay between the first positioning circuit transmitting the first request message and receiving the first response message after the first positioning circuit receiving the first response message — 102

determine a second distance between the robot and the second positioning circuit according to a time delay between the second positioning circuit transmitting the second request message and receiving the second response message after the second positioning circuit receiving the second response message — 103

determine a position of the robot relative to the charging pile according to the first distance and the second distance — 104

transmit information about the position to the robot, thereby the robot adjusting a path according to the position to complete the docking of the robot to the charging pile — 105

FIG. 1

FIG. 2

FIG. 3

42

Processor

41

memory

44

43

communication
interface

FIG. 4

53

first
positioning
circuit

56

control device
for providing
guidance

51

52

first
communicating
circuit

signal
receiver

55

second
positioning
circuit

54

signal
transmitter

FIG. 5

detect whether the robot is currently in a preset guidance area in the process of approaching a charging pile — 601

enter a guidance mode under a condition that the robot is currently in the preset guidance area — 602

transmit a guidance request message to the charging pile, thereby a third positioning circuit transmitting a first response message to the charging pile after receiving a first request transmitted by the charging pile, and transmitting a second response message to the charging pile after receiving a second request transmitted by the charging pile — 603

adjust a path according to a position after receiving information about the position transmitted by the charging pile — 604

drive a moving mechanism according to the path, thereby the robot docking to the charging pile — 605

FIG. 6

```
        ┌──────────────┐  71
        │     mode     │ ⌒
        │  converting  │
        │   module     │
        └──────────────┘
               │
        ┌──────────────┐  72
        │   guidance   │ ⌒
        │  requesting  │
        │   module     │
        └──────────────┘
               │
        ┌──────────────┐  73
        │    path      │ ⌒
        │  adjusting   │
        │   module     │
        └──────────────┘
               │
        ┌──────────────┐  74
        │   driving    │ ⌒
        │   module     │
        └──────────────┘
```

FIG. 7

```
┌──────────────────────────────────────────┐
│                                           │
│            82          ┌────────────┐  81 │
│           ⌒            │            │ ⌒   │
│      ┌──────────┐      │   memory   │     │
│      │          │      │            │     │
│      │Processor │      │            │     │
│      │          │      └─────┬──────┘     │
│      └────┬─────┘            ⇕            │
│           ⇕                               │
│  ◁═══════════════════════════════════▷    │
│        ⌒                                   │
│       84          ⇕                        │
│           ┌──────────────┐  83            │
│           │communication │ ⌒              │
│           │  interface   │                │
│           └──────┬───────┘                │
│                  ⇕                         │
└──────────────────────────────────────────┘
```

FIG. 8

third
positioning
circuit — 93

92 — second
communicating
circuit

robot
control
device — 91

moving
mechanism — 93

FIG. 9

**EP 4 155 858 B1**

## REFERENCES CITED IN THE DESCRIPTION

*This list of references cited by the applicant is for the reader's convenience only. It does not form part of the European patent document. Even though great care has been taken in compiling the references, errors or omissions cannot be excluded and the EPO disclaims all liability in this regard.*

**Patent documents cited in the description**

- US 2007118248 A1

- CN 106877454 A